# EUROPEAN PATENT SPECIFICATION

(11) **EP 0 406 960 B1**
(45) Date of publication and mention of the grant of the patent: **11.05.1994**
(21) Application number: 90201749.0
(22) Date of filing: 02.07.1990
(51) Int. Cl.: H04N 1/46

(54) **Method of and apparatus for forming a multi-colour image**
Verfahren und Gerät zur Herstellung eines Mehrfarbenbildes
Méthode et appareil pour produire une image multicolore

(30) Priority: 06.07.1989 NL 8901723
(43) Date of publication of application: 09.01.1991
(73) Proprietor: Océ-Nederland B.V., 5914 CC Venlo (NL)
(72) Inventor: Schonenberg, Jacobus Hendrikus Maria, NL-5914 JH Velden (NL)
(74) Representative: Hanneman, Henri W., Dr.

(56) References cited:
- EP-A- 0 270 087
- US-A- 3 904 816
- PATENT ABSTRACTS OF JAPAN, vol. 7, no. 127 (P-201)[1272], 3rd June 1983, page 58 P 201 & JP-A-58 44 459 (RICOH K.K.) 15-03-1983

## Description

The invention relates to a method of forming a multi-colour image by means of an image-forming device, in which separation images built up from image dots are generated in a first, second and possibly following colour or colours, on a moving image receiving medium, the separation image build-up being determined by composing the ultimate multi-colour image from image areas each consisting of a number of associated image dots, determining per image area the number of image dots to be generated in the first, second and any following colour or colours, and filling in each image area of each separation image with the determined number of image dots.

The invention also relates to apparatus for performing the method according to the invention.

A method as decribed above is known, for example, from Japanese Patent Application JP-A-58/44459.

A problem occurring in performing such a method is that register errors occur when combining separation images to form the ultimate multi-colour image.

Causes of these register errors include tolerances in the parts of the apparatus in which the method is performed and wear of the moving parts of such apparatus. These register errors lead to problems if mixed colours are to be obtained, for example, by means of opaque coloured toner powders, by printing next to one another in the correct proportions fine image dots which are indistinguishable to the naked eye in a first, second and any following colour. Since image dots of the different separation images then completely or partially overlap one another an incorrect proportion of image dots in the separation colours occurs and hence a different mixed colour from that required.

The above defects in the ultimately formed multi-colour image are all the more disturbing the greater the register error.

It has been found in practice that the register errors are much greater in the direction of movement of the image receiving medium than in the direction perpendicular thereto. Causes of this are, for example, speed variations or diameter variations in the apparatus drive and tolerances in the synchronisation of the different separation images.

The object of the invention is to minimise as much as possible the adverse effects of any register error in the multi-colour image. To this end, the invention provides a method according to the preamble, characterised in that the image areas are so filled in per separation image that the image dots are grouped to form one or more rows of image dots extending in the direction of movement of the image receiving medium.

The effect of this is that the maximum register error occurring in the direction of movement of the image receiving medium no longer has any effect on each image dot but only on the first and last dots of a row. This means at the most a shift within one separation colour in the direction of movement of the image receiving medium.

As considered in the direction perpendicular to the direction of movement of the image receiving medium, the image dot rows of different separation colours are filled in in the image area adjacent one another. As a result, the maximum register error occurring in the direction of movement does not result in any interaction between separation colours.

A register error in the direction perpendicular to the direction of movement of the medium on which the multi-colour image is formed does result in interaction between separation colours but such register errors are much smaller so that the adverse effects on the multi-colour image are of secondary importance.

In a preferred embodiment of the method according to the invention, when the separation image occupation extends over more than one image dot row, the image dots rows are filled in in the image area in contiguous relationship as considered in the direction perpendicular to the direction of movement of the image receiving medium.

The effect of this is that the different image dot rows in the same separation colours no longer occur separated from one another in the image area, but adjoin one another. As as result the number of interaction areas of image dot rows in different separation colours decreases and so does the adverse effect of register errors.

The number of interaction areas of different separation colours in the direction of movement is further reduced if, in addition, for each separation image the image dot rows of the image areas adjacent one another as considered in the direction of movement of the image receiving medium are filled in in line with one another.

The invention also relates to apparatus for printing a multicolour image, comprising means for generating on a moving image receiving medium separation images each built up from one-colour image dots, and a control circuit for controlling the separation image generating means to form the image dots, which control circuit divides the multi-colour image to be generated into image areas each containing a number of image dots, determines per image area the number of image dots of each separation image colour and fills in each image area of each separation image with the determined number of image dots. The apparatus is characterised in that the control circuit comprises a circuit which so fills in the image dots in each image area of each separation image that they are grouped in image dot rows extending in the direction of movement of the image receiving medium.

The invention is explained in detail with reference to the following description and accompanying drawings wherein:
Fig. 1 is a diagram of a printing device for performing the method according to the invention,
Figs. 2a-2b illustrate the results of a register error in the printing device of Fig. 1 with methods according to the prior art,
Figs. 3a-3b illustrate the efect of the method according to the invention on a register error as illustrated in Fig. 2, and,
Figs. 4a-4b illustrate the effect of another embodiment of the method according to the invention on the register error shown in Fig. 2.

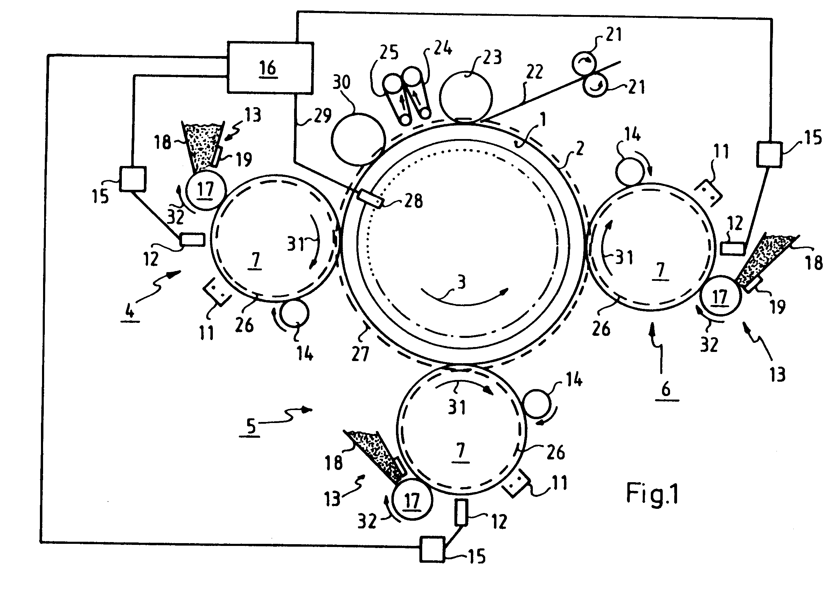

The printing device represented in Fig. 1 comprises a cylindrical intermediate support 1 which can be driven in the direction of arrow 3 by drive means (not shown). The intermediate support 1 has a metal sleeve, e.g. of aluminium, and a covering 2 of silicone rubber thereon. Covering 2 consists of an approximately 2 mm thick underlayer formed from silicone rubber RTV 200/201 of Messrs Possehl, Germany, and over this an approximately 200 µm thick top layer of silicone rubber in accordance with Example 8 of UK patent GB-A-1 279 687 and having a hardness of approximately 40° Shore A. Image forming stations 4, 5 and 6 are disposed along the path of rotation of the intermediate support 1. Each of these image forming stations comprises a cylindrical image receiving medium 7 on which a separation image is formed. The image receiving media 7 have the same diameter and are all in pressure contact with the intermediate support 1, the force with which the image receiving media 7 are pressed against the intermediate support 1 being at maximum 1000 N per linear metre. In this case the force is 250 N.

Each image receiving medium 7 consists of a cylinder with a photoconductive surface layer, the various image forming units being disposed distributedly over the circumference of this cylinder. These image forming units each comprise a corona device 11 for uniformly charging the photoconductive layer, an LED array 12 with which imagewise exposure is carried out, a magnetic brush device 13 to develop the latent charge image which has formed to give a powder image, and a cleaning device 14 for removing residual toner after transfer of the separation image to the intermediate support 1.

The LED array 12 which is, for example, of the type described in US patent US-A-4 524 372, is connected to an electronic circuit 15 to actuate each LED in the array in accordance with an information pattern to be printed. The electronic circuit 15 of each image forming station is in turn connected to a central control unit 16 which feeds the information concerning the separation image to be printed to each electronic circuit 15 line by line.

The magnetic brush device 13 comprises a magnetic roller 17 disposed a slight distance away from the circumference of the image receiving medium 7, said roller 17 consisting of a rotatable sleeve with a stationary magnet system therein.

A reservoir 18 filled with electrically conductive magnetically attractable toner powder is disposed at the sleeve of each magnetic roller 17. Each reservoir 18 contains a toner powder in a specific colour. A stripper 19 is provided at each reservoir 18 to ensure that an even layer of toner powder is applied to the sleeve of the magnetic roller 17.

Also disposed along the path of rotation of the intermediate support 1 are feed means for a sheet of image receiving material, such means consisting of co-operating conveyor rollers 21 and a guide plate 22, a pressure roller 23, discharge means for the sheet of image receiving material, consisting of co-operating conveyor belts 24 and 25, and a cleaning device 30.

Each image receiving medium 7 is driven by a gearwheel 26 mounted on the rotational shaft of the image receiving medium 7 and engaging in a gearwheel 27 secured to the driven shaft of the intermediate support 1. (In the drawing the gearwheels 26 and 27 are shown as broken circles, these circles indicating the gearwheel pitch circles).

A pulse generator 28 is connected to the intermediate support 1 and delivers pulses in relation to the angular rotation of the intermediate support 1. The angular rotation between consecutive pulses corresponds to a movement of the surface of the intermediate support 1 over the width of one image line. The recording of the consecutive image lines on the image receiving media 7 by the LED arrays 12 can thus be controlled by the control unit 16 by means of the pulses which are delivered by the pulse generator 28 and are fed to the control unit 16 via the connection 29.

When the printing device is in operation, the intermediate support 1, the image receiving media 7 and the magnetic rollers 17 are driven in the direction of arrows 3, 31 and 32. In these conditions, the photoconductive layer of an image receiving medium 7 after having been given a uniform electrostatic charge by the corona device 11, is exposed image-wise by the LED array 12, whereafter the latent charge image is developed by the magnetic brush device 13 to give a separation image of coloured toner powder. By selectively actuating the LED's in the array according to an image pattern an image dot pattern is formed of coloured toner powder on the image receiving medium 7.

The information concerning the image lines of the various separation images which are to be recorded is fed serially, line by line, to a shift register of the electronic circuits 15 by the control unit 16. On receipt thereafter of the next pulse from the pulse generator 28 the information stored in the shift register of the first image forming station 4 is transferred to an output register and certain LED's are actuated via drivers according to the image line to be recorded. In the meantime the shift register is filled with the information of the next image line. On receipt of the next pulse from the pulse generator 28 this image line is recorded. On receipt of a specific pulse from pulse generator 28 the image forming means of the second image forming station 5 are also activated and again a number of pulses later, those of the next image forming station 6 as well. The number of pulses after which the image forming means of the second and the next image forming station (or the next image forming stations) are actuated is predetermined from the distance between the image forming stations as considered along the circumference of the intermediate support 1. The correct number of pulses is fixed in a control program stored in a memory of the control unit 16.
The separation images formed on the image receiving media 7 are transferred to the intermediate support 1 in the various pressure contact zones. The powder image present on the intermediate support 1 is then heated in manner known per se, so that the powder image softens. The softened powder image is then transferred to an image receiving material (e.g. a sheet of paper) in the pressure zone between the intermediate support 1 and the pressure roller 23, said material having been supplied via the feed means 21, 22 at the correct time. The printed image receiving material is discharged by the co-operating conveyor belts 24 and 25. The intermediate support 1 then moves past the cleaning device 30.

With the device shown in Fig. 1 it is possible to obtain mixed colours by using coloured toner powders to print next to one another in the correct proportions fine image dots - not distinguishable with the naked eye - in a first, second and any following basic colour. Practically all mixed colours can be composed in a multi-colour printer operating according to the method of the invention, for example from the basic colours black, blue, green, red and yellow, by forming these colours in consecutive image receiving media and transferring them to the resilient intermediate support in the manner as indicated with respect to Fig. 1.

In these conditions a multi-colour image is built up from a raster of image areas in the form of matrix structures each consisting of a group of associated image dot locations arranged in a number of (e.g. 6) rows and columns, the rows extending in the direction of movement of the intermediate support and the columns in a direction perpendicular thereto.

The central control unit 16 comprises a control circuit which calculates which colour toner powder must occupy the different image dot locations of each separation image in the matrix structure to give the required mixed colour.

The algorithm of the control circuit on the one hand comprises a separation algorithm with which a degree of coverage for each basic colour is calculated to achieve the correct proportion of image dots in the basic colours and, on the other hand, a half-tone algorithm in order to calculate, on the basis of the degree of coverage, the occupation of the image dot locations in a matrix structure by a specific basic colour. In these conditions, for this matrix structure a comparison is made with a matrix of threshold levels (threshold matrix). The image dot patterns thus calculated for each separation image can be stored in a memory, e.g. a bit map memory, and then be fed line by line to the shift register of the electronic circuit 15. The LED arrays 12 of the image receiving media 7 are then provided with this information and each takes over the information of a separation image.

In these conditions a register error could result in image dots of the different separation images (basic colours) completely or partially overlapping one another, thus resulting in a wrong proportion between the image dots of the various basic colours and hence a mixed colour other than that required.

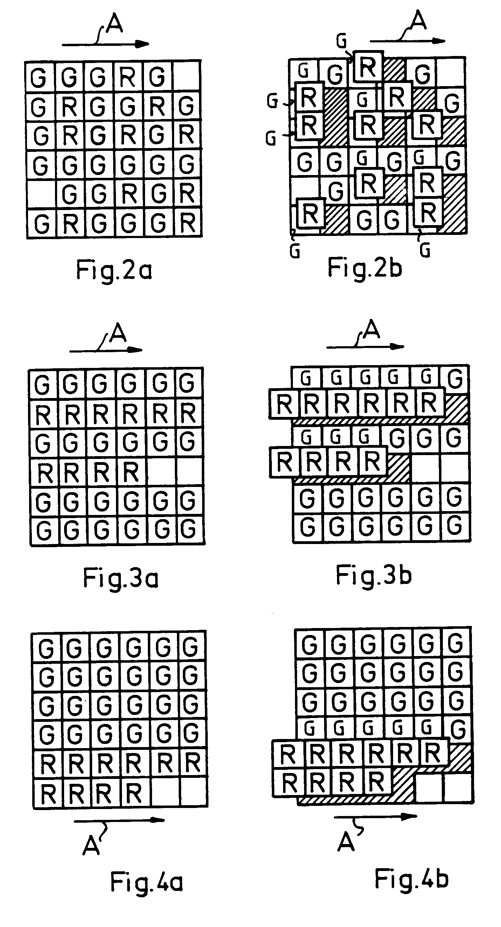

Reference will now be made to Figs. 2a-2b to explain how the effect of such a register error on the mixed colour occurs in methods of the prior art.

Fig. 2a shows how the image locations in a matrix structure are occupied if a random (statistical) half-tone algorithm is used to place a number of red image dots (R) and a number of yellow image dots (G) in the matrix structure to achieve a specific orange mixed colour. As a result of a register error between the image receiving media which form the yellow or red image dots respectively, a shift occurs in the image dots with respect to one another as shown in Fig. 2b.

As will be seen in Fig. 2b the register error is much larger in the direction of movement of the image receiving medium (indicated by an arrow A) than in the direction perpendicular thereto; for example by a factor of 5. The causes of this register error in the direction of arrow A lie in speed variations in the drive for the printing device and/or synchronisation tolerances between the different image receiving media. The register error causes a number of (white) parts shown by hatching in Fig. 2b on the final printing material (usually white copy paper) in each image area. For the mixed colour this means that a quantity of white is added to the red and yellow image dots per image area and a maller quantity of white disappears. This causes a colour shift towards white, so that the image area gives a different colour impression. The colour shift as a result of the register error is defined by the cumulative periphery of the shifted image dots and a weighing factor which is dependent upon the direction and the size of the register error. According to the invention, the effect of a register error is greatly reduced by grouping the image dots of each separation colour to form one or more rows of image dots extending in the direction of arrow A (see Fig. 3a). As a result, the periphery of the image dots grouped into rows is reduced.

In addition, the interaction with another separation colour in the direction of arrow A is now limited to the smallest peripheral side of an image dot row and then only at the beginning and end of such a row, as will be seen from Fig. 3b. In the direction perpendicular to the direction of movement there is in fact interaction with another separation colour over a greater distance, but the register error is much smaller in that direction. As illustrated in Figs. 4a-4b, the number of interaction areas between the different separation colours decreases still further by filling in image dot rows of the same colour, not separated from one another as in Figs. 3a-3b, but contiguously to one another in the image dot location occupation. The effect of this is clearly visible in Fig. 4b.

In the above description the invention has been explained by reference to a half-tone algorithm based on a matrix dither method in which image dots are set aside in matrix structures in accordance with a fixed pattern. The method according to the invention is not restricted thereto, however. Other half-tone methods known from the art can also be used to achieve mixed colours, in which according to the invention the influence of a register error is greatly reduced by grouping the image dots into rows which extend in the direction of movement of the image receiving medium.
Although the method according to the invention has been illustrated with reference to the printing device represented in Fig. 1, the invention is certainly not restricted thereto.

Although the printing device represented in Fig. 1 has three image forming stations, 4, 5, 6 by way of example, a larger number of image forming stations is required to obtain colours and mixed colours on a larger scale.

The method according to the invention can also be performed in an apparatus comprising just one image forming station or a limited number of image forming stations on which images can be generated in different colours. The multi-colour image is then formed in successive revolution cycles of the intermediate support co-operating with the or each image forming station. In a specific application it may also be necessary to use a different printing sequence of the basic colours from the sequence of the image forming stations, as considered in the direction of revolution of the intermediate support. This can be achieved by forming the multi-colour image in more than one revolution cycle of the intermediate support in order thus to obtain the required printing sequence.

In addition, the embodiment of the image forming stations illustrated here can be replaced by one or more other image forming devices known from the art, e.g. based on a magnetographic, electrographic or electrophotographic process, in which a latent magnetic or electrostatic separation image dot pattern is formed on an image receiving medium and this separation image is developed with coloured toner powder.

Finally, it is also possible to replace the image forming stations from Fig. 1 by ink-jet image forming devices with which separation colour images are formed with coloured ink particles on a copy support temporarily secured by known means to the periphery of the cylindrical intermediate support 1 or passed by guide means past the consecutive image forming stations in order thus to combine the separation images into a multi-colour image.

## Claims

1. A method of forming a multi-colour image by means of an image-forming device, in which separation images built up from image dots are generated in a first, second and possibly following colour or colours, on a moving image receiving medium, the separation image build-up being determined by composing the ultimate multi-colour image from image areas each consisting of a number of associated image dots, determining per image area the number of image dots to be generated in the first, second and any following colour or colours, and filling in each image area of each separation image with the determined number of image dots, characterised in that the image areas are so filled in per separation image that the image dots are grouped to form one or more rows of image dots extending in the direction of movement of the image receiving medium.

2. A method according to claim 1, characterised in that when the separation image occupation extends over more than one image dot row, the image dot rows are filled in in the image area in contiguous relationship as considered in the direction perpendicular to the direction of movement of the image receiving medium.

3. A method according to claim 1 or 2, characterised in that for each separation image the image dot rows of the image areas adjacent one another as considered in the direction of movement of the image receiving medium are filled in in line with one another.

4. Apparatus for printing a multi-colour image comprising means (12) for generating on a moving image receiving medium (7) separation images each built up from one-colour image dots, and a control circuit (15, 16) for controlling the separation image generating means (12) to form the image dots, which control circuit divides the multi-colour image to be generated into image areas each containing a number of image dots, determines per usage area the number of image dots of each separation image colour and fills in each image area of each separation image with the determined number of image dots, characterised in that the control circuit (16) comprises a circuit which so fills in the image dots in each image area of each separation image that they are grouped in image dot rows extending in the direction of movement of the image receiving medium.

## Patentansprüche

1. Verfahren zur Herstellung eines Mehrfarbenbildes mit Hilfe einer Bilderzeugungseinrichtung, in der aus Bildpunkten aufgebaute Farbauszüge in einer ersten, zweiten und gegebenenfalls einer weiteren Farbe oder weiteren Farben auf einem sich bewegenden Bildempfangsmedium erzeugt werden, wobei der Aufbau der Farbauszüge bestimmt wird durch Zusammensetzen des letztendlichen Mehrfarbenbildes aus Bildbereichen, die jeweils aus einer Anzahl von zugehörigen Bildpunkten bestehen, durch Bestimmen der Anzahl der in der ersten, zweiten und etwaigen folgenden Farbe oder Farben zu erzeugenden Bildpunkte pro Bildbereich und Ausfüllen jedes Bildbereiches jedes Farbauszugs mit der bestimmten Anzahl von Bildpunkten, dadurch **gekennzeichnet,** daß die Bildbereiche pro Farbauszug so ausgefüllt werden, daß die Bildpunkte so gruppiert sind, daß sie ein oder mehrere Reihen von Bildpunkten bilden, die sich in der Bewegungsrichtung des Bildempfangsmediums erstrecken.

2. Verfahren nach Anspruch 1, dadurch **gekennzeichnet,** daß, wenn sich die Besetzung des Farbauszugs über mehr als eine Bildpunktreihe erstreckt, die Bildpunktreihen in der Richtung rechtwinklig zur Bewegungsrichtung des Bildempfangsmediums gesehen in zusammenhängender Anordnung in den Bildbereich eingesetzt werden.

3. Verfahren nach Anspruch 1 oder 2, dadurch **gekennzeichnet,** daß für jeden Farbauszug die Bildpunktreihen der einander in Bewegungsrichtung des Bildempfangsmediums benachbarten Bildbereiche miteinander ausgerichtet eingesetzt werden.

4. Gerät zum Drucken eines Mehrfarbenbildes, mit Mitteln (12) zum Erzeugen von Farbauszügen, die jeweils aus einfarbigen Bildpunkten aufgebaut sind, auf einem sich bewegenden Bildempfangsmedium (7), und einer Steuerschaltung (15, 16) zur Steuerung der Farbauszugs-Erzeugungsmittel (12) zur Bildung der Bildpunkte, welche Steuerschaltung das zu erzeugende Mehrfarbenbild in Bildbereiche aufteilt. die jeweils eine Anzahl von Bildpunkten enthalten, die Anzahl von Bildpunkten jeder Farbauszugsfarbe pro Bildbereich bestimmt und jeden Bildbereich jedes Farbauszugs mit der bestimmten Anzahl von Bildpunkten ausfüllt, dadurch **gekennzeichnet**, daß die Steuerschaltung (16) eine Schaltung aufweist, die die Bildpunkte so in jeden Bildbereich jedes Farbauszugs einsetzt, daß sie in Bildpunktreihen gruppiert sind, die sich in der Bewegungsrichtung des Bildempfangsmediums erstrecken.

## Revendications

1. Procédé de formation d'une image en plusieurs couleurs au moyen d'un dispositif de formation d'image, selon lequel des images séparées formées de points d'image sont produites en une première couleur, une seconde couleur et éventuellement une couleur suivante ou des couleurs suivantes, sur un milieu récepteur d'image en déplacement, la formation d'images séparées étant déterminée en composant l'image définitive en plusieurs couleurs à partir de zones d'image constituées chacune d'un certain nombre de points d'image associés, en déterminant, par zone d'image, le nombre de points d'image à produire dans la première couleur, la seconde couleur et toute autre couleur ou couleurs suivantes, et en plaçant dans chaque zone d'image de chaque image séparée le nombre déterminé de points d'image, caractérisé en ce que les zones d'image sont emplies, par image séparée, d'une façon telle que les points d'image sont groupés de manière à former une ou plusieurs rangées de points d'image qui s'étendent suivant la direction de déplacement du milieu récepteur d'image.

2. Procédé suivant la revendication 1, caractérisé en ce que, lorsque l'occupation des images séparées s'étend sur plus d'une rangée de points d'image, les rangées de points d'image sont placées dans la zone d'image suivant une disposition relative contiguë lorsqu'on les considère suivant la direction perpendiculaire à la direction de déplacement du milieu récepteur d'image.

3. Procédé suivant l'une des revendications 1 et 2, caractérisé en ce que, pour chaque image séparée, les rangées de points d'image des zones d'image adjacentes l'une à l'autre lorsqu'on les considère suivant la direction de déplacement du milieu récepteur d'image sont placées en série l'une après l'autre.

4. Appareil d'impression d'une image en plusieurs couleurs, comprenant des moyens (12) servant à produire, sur un milieu récepteur d'image (7) en déplacement, des images séparées formées chacune de points d'image en une seule couleur, et un circuit de commande (15, 16) qui sert à commander les moyens (12) de production d'images séparées de façon à former les points d'image et qui divise l'image en plusieurs couleurs à produire en zones d'image contenant chacune un certain nombre de points d'image, détermine, par zone d'image, le nombre de poins d'images de chaque couleur d'image séparée,et place le nombre déterminé de points d'image dans chaque zone d'image de chaque image séparée, caractérisé en ce que le circuit de commande (16) comprend un circuit qui place les points d'image dans chaque zone d'image de chaque image séparée d'une façon telle qu'ils sont groupés en rangées de points d'image s'étendant suivant la direction de déplacement du milieu récepteur d'image.
